# EUROPEAN PATENT APPLICATION

(11) **EP 4 439 913 A1**
(43) Date of publication of application: **02.10.2024**
(21) Application number: 22947253.5
(22) Date of filing: 22.06.2022
(51) Int. Cl.: H02J 7/00

(54) **BATTERY PACK AND SAFETY CONTROL METHOD THEREFOR, AND ELECTRIC DEVICE**

(71) Applicant: Contemporary Amperex Technology Co., Limited, Ningde, Fujian 352100 (CN)
(72) Inventor: WU, Shaoji, Ningde, Fujian 352100 (CN); CHEN, Xiaobo, Ningde, Fujian 352100 (CN); CHEN, Shilong, Ningde, Fujian 352100 (CN)
(74) Representative: Rowlands, Stuart Michael
(86) International application number: PCT/CN2022/100324
(87) International publication number: WO 2023/245474

(57) **Abstract**

A battery pack and a safety control method therefor, and an electric device. The battery pack (200) comprises a case assembly (201); a plurality of battery cells (100), which each have a shell (100') and are arranged in the case assembly (201); and a safety protection mechanism (1), which is arranged in the case assembly (201) and has a first state and a second state. When the safety protection mechanism (1) is in the first state, the plurality of battery cells (100) are insulated from the case assembly (201); when a preset trigger condition is met, the safety protection mechanism (1) is in the second state; and when the safety protection mechanism (1) is in the second state, the shells (100') of the at least some of the battery cells (100) are electrically connected to the case assembly (201).

## Description

### TECHNICAL FIELD

This application relates to the field of battery technologies, and in particular, to a battery pack, a safety control method therefor, and an electric apparatus.

### BACKGROUND

Lithium-ion batteries and the like have been widely used in electric vehicles due to their advantages such as high energy density, high power density, long cycle life, and long storage time.

However, improving the safety of batteries in electric vehicles during use has been a concern in the industry.

### SUMMARY

This application is intended to improve safety of a battery during use.

According to a first aspect of this application, a battery pack is provided, including:
a box assembly;
a plurality of battery cells disposed in the box assembly, the battery cell including a housing; and
a safety protection mechanism disposed in the box assembly and having a first state and a second state, where when the safety protection mechanism is in the first state, the plurality of battery cells are insulated from the box assembly; and the safety protection mechanism is in the second state when a preset trigger condition is met, and when the safety protection mechanism is in the second state, the housings of at least some of the battery cells are electrically connected to the box assembly.

In the battery pack according to this embodiment, when the battery cell experiences an anomaly and the preset trigger condition is met, the safety protection mechanism can change from the first state to the second state to actively and controllably electrically connect at least some of the battery cells to the box assembly, so that at least some of the battery cells form an equipotential body with the box assembly, thereby avoiding high voltage spark inside the battery pack, and adjusting the battery pack from an abnormal state to a stable and controllable state in a timely manner.

Furthermore, insulation failure points can appear inside the battery pack through the electrical connection between at least some of the battery cells and the box assembly, which switches a high-voltage system in the battery pack to a plurality of equipotential components, thereby protecting the battery pack and improving safety of the battery pack during operation.

In addition, when the battery pack is operating with an anomaly, the housing is electrically connected to the box assembly. Due to a large surface area of the housing, which is conducive to mounting the safety protection mechanism and realizing reliable action of the safety protection mechanism, the safety protection mechanism can be kept away from the electrically connected part of the battery cell, preventing the action of the safety protection mechanism from affecting the electrically connected part. Moreover, because the battery cell is covered by an insulating layer in a normal operating state of the battery pack, insulation performance between the battery cell and the box assembly can also be reliably ensured with the safety protection mechanism disposed.

In some embodiments, when the safety protection mechanism is in the second state, the number of battery cells electrically connected to the box assembly is at least three.

In the battery pack according to these embodiments, when the preset trigger condition is met, the safety protection mechanism is in the second state, and at least three insulation failure points can be formed inside the battery pack through the electrical connection between at least three battery cells and the box assembly, so as to reduce voltage division of an entire high-voltage load between two insulation failure points. This reduces the risk of high voltage spark, and adjusts the battery pack from the abnormal state to the stable and controllable state in a timely manner, which can not only improve the safety of the battery cells in the battery pack, but also improve safety of a control electrical box connected to the battery pack.

In some embodiments, when the safety protection mechanism is in the second state, the housings of all the battery cells are electrically connected to the box assembly.

In the battery pack according to these embodiments, when the preset trigger condition is met, the safety protection mechanism is in the second state, all the battery cells in the battery pack are electrically connected to the box assembly, and an insulation failure point can be formed on each battery cell in the battery pack, so as to minimize voltage division of the entire high-voltage load between two insulation failure points. Even if any one of the battery cells experiences an anomaly, the risk of high voltage spark can be reduced, and the battery pack can be changed from the abnormal state to the stable and controllable state in a timely manner, which can not only improve the safety of the battery cells in the battery pack, but also improve the safety of the control electrical box connected to the battery pack.

In some embodiments, the safety protection mechanism includes a plurality of protection subcomponents, where the plurality of protection subcomponents are disposed in one-to-one correspondence to the plurality of battery cells, the protection subcomponent each have the first state and the second state, and the protection subcomponent is configured to insulate, in the first state, the corresponding battery cell from the box assembly and to electrically connect, in the second state, the corresponding battery cell to the box assembly.

In these embodiments, the plurality of protection subcomponents are disposed in one-to-one correspondence to the plurality of battery cells, which means that the safety protection mechanism is provided as a plurality of independent protection subcomponents, so that the protection subcomponents can be flexibility provided for a specific number of battery cells and battery cells located in specific positions, which simplifies the structure of the protection subcomponents and reduces the volume of the protection subcomponents, helping dispose the protection subcomponents in the compact internal space of the battery pack. In addition, if the battery pack has a failed protection subcomponent after long-term operation, it can still achieve the safety protection function at a reduced level by relying on other protection subcomponents, further improving the safety of the battery pack during operation.

In some embodiments, the safety protection mechanism is disposed between the battery cells and a bottom wall or top wall of the box assembly.

In these embodiments, safety protection for some or all of the battery cells in one layer can be achieved by only adding a preset space in a height direction of the battery pack, which not only ensures a compact internal space of the battery pack, but also protects more battery cells using the smallest space, thereby improving the safety of the battery pack during operation.

In some embodiments, the preset trigger condition includes at least one of the following: temperature inside the box assembly reaches a preset temperature, air pressure inside the box assembly reaches a preset pressure, smoke concentration inside the box assembly reaches a preset concentration, and a battery management system of the battery pack sends an electrical signal indicating anomaly in the battery cells.

In these embodiments, the occurrence of anomalies in the battery pack can be quantitatively determined, so as to accurately determine the timing of the safety protection mechanism switching to the second state, which not only ensures the safety of the battery pack in the case of anomalies, but also prevents the safety protection mechanism from accidentally starting.

In some embodiments, the safety protection mechanism is configured to be restored to the first state when the safety protection mechanism is in the second state and the preset trigger condition no longer exists.

In these embodiments, it is taken into consideration that after the battery pack experiences an anomaly, bumps and vibrations during driving of a vehicle may cause some of the battery cells that are electrically connected to the box assembly to detach from the electrical connection, which reduces the number of battery cells with insulation failure points, thereby increasing voltage division between adjacent insulation failure points. In this case, there is still electrical connection between the box assembly and some of the battery cells, which poses an operational risk to an operator to remove the scrapped battery pack. In the embodiments, after the safety risk of the battery pack is reduced, the safety protection mechanism is actively restored to the first state, which can reduce the operational risk to the operator to remove the scrapped battery pack and improve the operational safety.

In some embodiments, the safety protection mechanism is configured to change from the first state to the second state through mechanical action when the preset trigger condition is met.

In these embodiments, when the preset trigger condition is met, the safety protection mechanism can achieve state change through mechanical action, and the action is reliable, so as to achieve reliability of the safety protection for the battery cell, facilitating bidirectional switching between the first state and the second state.

In some embodiments, the battery pack further includes a controller configured to send a start signal to the safety protection mechanism when receiving a signal indicating that the preset trigger condition is met, so that the safety protection mechanism changes from the first state to the second state.

In these embodiments, when the battery pack is operating with an anomaly, the controller actively controls the starting of the safety protection mechanism, such that the controller can make a comprehensive determination about the received signal, for example, detecting that the signal has exceeded a preset threshold for a preset time before finally determining that the preset trigger condition is met, so as to avoid accidental deviation in the signal collected by a state monitoring component, which can more accurately determine the starting timing of the safety protection mechanism, preventing scrapping of the battery pack caused by mistaken starting of the safety protection mechanism. In addition, in the active control manner, after the safety protection mechanism starts, the controller can take other safety protection measures, for example, powering down the battery pack, cooling the battery pack, or actively starting a pressure relief component on the box assembly.

In some embodiments, the safety protection mechanism includes a plurality of protection subcomponents disposed corresponding to different battery cells respectively, and the battery pack further includes a control harness and a switch, where the control harness connects the plurality of protection subcomponents in series, and the switch is disposed in series in the control harness; where the controller is configured to send a start signal to the plurality of protection subcomponents by closing the switch.

In the embodiments, when the battery pack is operating with an anomaly, these controller can simultaneously start the plurality of protection subcomponents by controlling the closure of the switch, so that the plurality of protection subcomponents simultaneously change to the second state, which can simplify the control manner, improve the response speed when the battery pack is experiencing an anomaly, and quickly cause the housings of the plurality of battery cells to form an equipotential body with the box assembly, avoiding high voltage spark inside the battery pack, and adjusting the battery pack from the abnormal state to the stable and controllable state in a timely manner.

In some embodiments, the safety protection mechanism is configured to directly change from the first state to the second state under the action of the preset trigger condition.

In these embodiments, when the battery pack is operating with an anomaly, the safety protection mechanism is passively started by directly relying on environmental changes in the box assembly, with no need for the controller to determine the environmental changes and then send the start signal to the safety protection mechanism. In this way, the safety protection mechanism can start in a more timely and quicker manner, and when the battery pack is out of control, the battery cells can quickly form an equipotential body with the box assembly, and a plurality of insulation failure points are formed inside the battery pack, which reduces voltage division of the entire high-voltage load between two insulation failure points, prevents momentary high voltage spark, and adjusts the battery pack from the abnormal state to the stable and controllable state in a timely manner, avoiding further deterioration.

In some embodiments, the safety protection mechanism includes a conductive portion, where the conductive portion is configured to come into contact with the housing through its own movement when the preset trigger condition is met, so that the safety protection mechanism is in the second state, and in the second state, the conductive portion is electrically connected to the box assembly.

In these embodiments, the safety protection mechanism starts through the movement of the conductive portion, and when the conductive portion moves to come into contact with the housing, the safety protection mechanism is in the second state, which can more accurately control the starting of the safety protection mechanism. In addition, even if there is a large distance between the box assembly and the battery cell, the electrical connection between the housing and the box assembly can also be achieved by controlling the movement of the conductive portion, improving the internal insulation performance of the battery pack during normal operation while ensuring that the safety protection mechanism starts reliably.

In some embodiments, the safety protection mechanism includes a plurality of protection subcomponents disposed corresponding to different battery cells respectively, the protection subcomponent having the first state and the second state; and the protection subcomponent includes a conductive element, where the conductive element is configured to come into contact with the housing through its own movement when the preset trigger condition is met, so that the protection subcomponent is in the second state, and in the second state, the conductive element is electrically connected to the box assembly.

In these embodiments, the safety protection mechanism is provided as a plurality of independent protection subcomponents, so that the protection subcomponents can be flexibility provided for a specific number of battery cells and battery cells located in specific positions, which simplifies the structure of the protection subcomponents and reduces the volume of the protection subcomponents, helping dispose the protection subcomponents in the compact internal space of the battery pack. In addition, if the battery pack has a failed protection subcomponent after long-term operation, it can still achieve the safety protection function in a reduced level by relying on other protection subcomponents, further improving the safety of the battery pack during operation.

In some embodiments, the protection subcomponent further includes a force application control component, where when the protection subcomponent is in the first state, the force application control component is configured to apply force to the conductive element, so as to limit the conductive element to a position separated from the housing; and when the protection subcomponent is in the second state, the force application control component is configured to apply force to the conductive element, so that the conductive element moves to come into contact with the housing.

In the protection subcomponent in these embodiments, the force application control component applies force to the conductive element to cause the conductive element to move, making it easy to control the position of the conductive element, thereby reliably keeping the protection subcomponent in the first state or the second state.

In some embodiments, the conductive element is a conductive magnet, and the force application control component is a metal member, where the force application control component is energized to form an electromagnet with a polarity opposite to that of the conductive magnet when the protection subcomponent is in the first state, and energized to form an electromagnet with the same polarity as the conductive magnet when the protection subcomponent is in the second state.

In these embodiments, the conductive element is kept in different positions by changing the polarity of the force application control component after magnetization, with sensitive and rapid action and large force, so that the protection subcomponent can flexibly switch its state, with a simple structure and ease of control. In addition, the protection subcomponent can switch between the first state and the second state, which can not only avoid high voltage spark and adjust the battery pack from the abnormal state to the stable and controllable state in a timely manner when the battery pack experiences an anomaly, but also actively restore the safety protection mechanism to the first state after the safety risk of the battery pack is reduced, reducing the operational risk to the operator to remove the scrapped battery pack and improving the operational safety.

In some embodiments, the force application control component includes an electric driving member configured to: drive the conductive element to be in the position separated from the housing when the protection subcomponent is in the first state, and drive the conductive element to move to come into contact with the housing when the protection subcomponent is in the second state.

In these embodiments, the conductive element can be kept in different positions by changing and controlling the movement of the electric driving member, which can achieve large force and precisely control the position of the conductive element, so that the protection subcomponent can flexibly switch its state, with a simple structure and ease of control, improving the reliability of the protection for the battery cell. In addition, the protection subcomponent can switch between the first state and the second state, which can not only avoid high voltage spark and adjust the battery pack from the abnormal state to the stable and controllable state in a timely manner when the battery pack experiences an anomaly, but also actively restore the safety protection mechanism to the first state after the safety risk of the battery pack is reduced, reducing the operational risk to the operator to remove the scrapped battery pack and improving the operational safety.

In some embodiments, the force application control component includes a restraint member and an elastic element, where the restraint member is configured to limit the conductive element to being separated from the housing when the protection subcomponent is in the first state, and the elastic element is configured to apply elastic force to the conductive element when the protection subcomponent is in the second state, so that the conductive element moves to come into contact with the housing.

In these embodiments, the conductive element can be kept in different positions through cooperation of the restraint member and the elastic element. In the first state, the restraint member can reliably limit the position of the conductive element to ensure that the battery cell is insulated from the box assembly, and in the case of switching to the second state, the elastic element can provide large force and sensitive action, so that the protection subcomponent can quickly switch to the second state, with a simple structure and ease of control, improving the reliability of the protection for the battery cell.

In some embodiments, the safety protection mechanism includes a plurality of protection subcomponents disposed corresponding to different battery cells respectively, where the protection subcomponent includes:
a balancing member, with a first end connected to the conductive element;
a support configured to support the balancing member; and
an actuating member connected to a second end of the balancing member and configured to move when air pressure inside the box assembly reaches a preset pressure, such that the balancing member swings around a support point, which causes the conductive element to move to come into contact with the housing, so that the protection subcomponent changes from the first state to the second state.

In these embodiments, the position of the conductive element is adjusted through the air pressure inside the box assembly acting on a lever structure, which can passively control the state switching of the protection subcomponent based on the environmental situations and eliminate the state monitoring component, thereby simplifying the structure and avoiding mistaken starting of the protection subcomponent caused by failure of electronic components, improving the reliability of the protection for the battery cell. In addition, when the air pressure inside the box assembly returns to normal, the protection subcomponent can be restored to the first state, which can not only avoid high voltage spark and adjust the battery pack from the abnormal state to the stable and controllable state in a timely manner when the battery pack experiences an anomaly, but also actively restore the safety protection mechanism to the first state after the safety risk of the battery pack is reduced, reducing the operational risk to the operator to remove the scrapped battery pack and improving the operational safety.

In some embodiments, the conductive element is configured to come into contact with the housing by moving or rotating when the preset trigger condition is met.

In these embodiments, the structure with a moving conductive element allows for easier control of the moving track, so the conductive element can be accurately electrically connected to a preset lap point on the housing. For the structure with a rotating conductive element, because the conductive element keeps being electrically connected to the box assembly during rotation, there is no need to provide an intermediate adapting structure like an accommodating member, further simplifying the structure.

According to a second aspect of this application, an electric apparatus is provided, including the battery pack according to the foregoing embodiments, where the battery pack is configured to supply electric energy to the electric apparatus.

According to a third aspect of this application, a safety control method for battery pack is provided, including:
making a safety protection mechanism in a box assembly of a battery pack be in a first state, so that a plurality of battery cells in the box assembly are insulated from the box assembly; and
making the safety protection mechanism change from the first state to a second state when a preset trigger condition is met, so that housings of at least some of the battery cells are electrically connected to the box assembly.

In some embodiments, the making the safety protection mechanism change from the first state to a second state when a preset trigger condition is met includes:
when a controller receives a signal indicating that the preset trigger condition is met, sending, by the controller, a start signal to the safety protection mechanism, so that the safety protection mechanism changes from the first state to the second state.

In some embodiments, the safety control method further includes:
under the condition that the safety protection mechanism is in the second state, when the preset trigger condition no longer exists, restoring the safety protection mechanism to the first state.

### BRIEF DESCRIPTION OF DRAWINGS

To describe the technical solutions of the embodiments of this application more clearly, the following briefly describes the accompanying drawings required for describing the embodiments of this application. It will be apparent that the accompanying drawings described below show merely some embodiments of this application, and persons of ordinary skill in the art may still derive other drawings from the accompanying drawings without creative efforts.
FIG. 1 is a schematic structural diagram of a battery pack installed on a vehicle in some embodiments of this application.
FIG. 2 is an exploded view of a battery pack in some embodiments of this application.
FIG. 3 is a schematic structural diagram of a battery cell in some embodiments of this application.
FIG. 4 is a schematic exploded view of a battery cell in some embodiments of this application.
FIG. 5 is a schematic structural diagram of a battery pack with a safety protection mechanism in Embodiment 1 of this application.
FIG. 6 is a schematic diagram of an operating principle of a safety protection mechanism in a battery pack according to this application.
FIG. 7 is a schematic diagram of a protection subcomponent in Embodiment 1 in a first state.
FIG. 8 is a schematic diagram of the protection subcomponent in Embodiment 1 in a second state.
FIG. 9 is a schematic diagram of a protection subcomponent in Embodiment 2 in a first state.
FIG. 10 is a schematic diagram of the protection subcomponent in Embodiment 2 in a second state.
FIG. 11 is a schematic diagram of a protection subcomponent in Embodiment 3 in a first state.
FIG. 12 is a schematic diagram of the protection subcomponent in Embodiment 3 in a second state.
FIG. 13 is a schematic diagram of a protection subcomponent in Embodiment 4 in a first state.
FIG. 14 is a schematic diagram of the protection subcomponent in Embodiment 4 in a second state.
FIG. 15 is a schematic diagram of a protection subcomponent in Embodiment 5 in a first state.
FIG. 16 is a schematic diagram of the protection subcomponent in Embodiment 5 in a second state.
FIG. 17 is a schematic structural diagram of a battery pack using the protection subcomponent in Embodiment 5.
FIG. 18 is a schematic flowchart of a safety control method for battery pack in some embodiments of this application.
FIG. 19 is a schematic structural diagram of a safety control apparatus for battery pack in some embodiments of this application.

The accompanying drawings are not drawn to scale.

Reference signs:
1. safety protection mechanism; 1'. protection subcomponent; 11'. conductive portion; 11. conductive element; 12. force application control component; 13. restraint member; 14. elastic element; 15. balancing member; 16. support; 17. actuating member; 18. accommodating member;
100. battery cell; 100'. housing; 10. housing body; 101. opening; 20. insulating layer; 30. electrode assembly; 30'. tab; 40. adapter; 50. end cover; 51. electrode terminal; 52. pressure relief component;
200. battery pack; 200'. battery module; 201. box assembly; 201A. box body; 201B. cover body; 202. control harness; 203. state monitoring component; 204. controller; 205. battery management system; 206. switch;
300. vehicle; 301. axle; 302. wheel; 303. motor; 304. controller;
401. memory; 402. processor; 403. communication interface; and 404. bus.

### DESCRIPTION OF EMBODIMENTS

The following further describes the implementations of this application in detail with reference to the accompanying drawings and embodiments. The following detailed description of embodiments and the accompanying drawings are intended to illustrate the principle of this application, rather than to limit the scope of this application, meaning this application is not limited to the embodiments described herein.

In the descriptions of the embodiments of this application, the term "a plurality of" means more than two (inclusive). Similarly, "a plurality of groups" means more than two (inclusive) groups, and "a plurality of pieces" means more than two (inclusive) pieces.

This application uses the descriptions of the orientations or positional relationships indicated by "upper", "lower", "top", "bottom", "front", "rear", "inside", "outside", and the like, which are merely for ease of description of this application rather than indicating or implying that the apparatus mentioned must have specific orientations or must be constructed or manipulated according to specific orientations. These terms shall therefore not be construed as any limitations on the protection scope of this application.

In addition, the terms "first", "second", "third", and the like are merely for the purpose of description and shall not be understood as any indication or implication of relative importance. "Perpendicular" is not perpendicular in the strict sense but within an allowable range of error. "Parallel" is not parallel in the strict sense but within an allowable range of error. The orientation terms appearing in the following description all refer to directions shown in the figures, and do not limit the specific structure of this application.

In the description of this application, it should also be noted that unless otherwise specified and defined explicitly, the terms "mount", "connect", and "join" should be understood in their general senses. For example, they may refer to a fixed connection, a detachable connection, or an integral connection; and a direct connection or an indirect connection via an intermediate medium. Persons of ordinary skill in the art can understand specific meanings of these terms in this application as appropriate to specific situations.

In this specification, reference to "embodiment" means that specific features, structures, or characteristics described with reference to the embodiment may be incorporated in at least some embodiments of this application. The word "embodiment" appearing in various places in the specification does not necessarily refer to the same embodiment or an independent or alternative embodiment that is exclusive of other embodiments. It is explicitly or implicitly understood by persons skilled in the art that the embodiments described herein may be combined with other embodiments.

A battery cell may include a lithium-ion secondary battery, a lithium-ion primary battery, a lithium-sulfur battery, a sodium-lithium-ion battery, a sodium-ion battery, a magnesium-ion battery, or the like. This is not limited in the embodiments of this application. The battery cell may be cylindrical, flat, cuboid, or of other shapes, which is not limited in the embodiments of this application either. Battery cells are typically categorized into three types by packaging method: cylindrical battery cell, prismatic battery cell, and pouch battery cell. This is not limited in the embodiments of this application either.

An existing battery cell generally includes a housing body and an electrode assembly accommodated in the housing body, with electrolyte filled in the housing body. The electrode assembly is mainly formed by stacking or winding a first electrode plate and a second electrode plate with opposite polarities, and an insulator, for example, a separator, is typically provided between the first electrode plate and the second electrode plate. Parts of the first electrode plate and the second electrode plate that are coated with active substances constitute a body portion of the electrode assembly, while parts of the first electrode plate and the second electrode plate that are coated with no active substances constitute a first tab and a second tab respectively. In a lithium-ion battery, the first electrode plate may be a positive electrode plate including a positive electrode current collector and positive electrode active substance layers provided on two sides of the positive electrode current collector, where the positive electrode current collector may be made of, for example, aluminum, and the positive electrode active substance may be, for example, lithium cobalt oxide, lithium iron phosphate, ternary lithium, or lithium manganate oxide; and the second electrode plate may be a negative electrode plate including a negative electrode current collector and negative electrode active substance layers provided on two sides of the negative electrode current collector, where the negative electrode current collector may be made of, for example, copper, and the negative electrode active substance may be, for example, graphite or silicon. Optionally, the first electrode plate may alternatively be a negative electrode plate, and correspondingly, the second electrode plate is a positive electrode plate. The first tab and the second tab may both be located on one end of the body portion or be located on two ends of the body portion respectively. During charging and discharging of the battery cell, the positive electrode active substance and the negative electrode active substance react with the electrolyte, and the tabs are connected to terminals to form a current loop.

Currently, batteries are still having great safety hazards during use, for example, the whole battery system experiences high voltage spark during use. The inventors have found through research that the reason for this phenomenon is that when the battery cells in the battery pack experience thermal runaway, the high-temperature combustible smoke produced is difficult to quickly discharge and easily accumulates inside the box to form a high-temperature and high-pressure environment, which locally damages the insulation design inside the battery pack, leading to high voltage of some of the battery cells. In addition, when the battery pack has the foregoing problem, the number and positions of high voltage sparks are uncertain, so it is impossible to adjust the battery from an abnormal state to a stable and controllable state in a timely manner.

Moreover, after the emissions in the battery cells splash to the electrical connection structure through an explosion-proof valve, short circuit also easily occurs, or high voltage spark affects other battery cells. Thus, heat diffusion of the battery cells causes high voltage arcing. It can be seen that thermal runaway not only has high-temperature effects, but also further deteriorates to cause high voltage spark of the battery pack.

To solve the foregoing problems, the inventors have thought of actively controlling the voltage of the battery cell at a safe and stable level when the battery cell is experiencing thermal runaway or other anomalies during operation, so as to avoid high voltage spark to the greatest extent.

Based on this improvement idea, this application proposes a battery pack. The battery pack includes a box assembly; a plurality of battery cells disposed in the box assembly; and a safety protection mechanism disposed in the box assembly and having a first state and a second state. When the safety protection mechanism is in the first state, the plurality of battery cells are insulated from the box assembly; and the safety protection mechanism is in the second state when a preset trigger condition is met, and when the safety protection mechanism is in the second state, at least some of the battery cells are electrically connected to the box assembly.

In such a battery pack, when a battery cell experiences an anomaly so that the preset trigger condition is met, the safety protection mechanism can change from the first state to the second state to actively and controllably electrically connect at least some of the battery cells to the box assembly, so that insulation failure points appear inside the battery pack and at least some of the battery cells form an equipotential body with the box assembly, which switches a high-voltage system in the battery pack to a plurality of equipotential components, thereby avoiding high voltage spark inside the battery pack, and adjusting the battery pack from an abnormal state to a stable and controllable state in a timely manner, thereby protecting the battery pack and improving safety of the battery pack during operation.

The battery cell according to the embodiments of this application is applicable to batteries and electric apparatuses using a battery.

The electric apparatus may be a mobile phone, a portable device, a notebook computer, an electric bicycle, an electric vehicle, a ship, a spacecraft, an electric toy, an electric tool, or the like. For example, the spacecraft includes an airplane, a rocket, a space shuttle, a spaceship, and the like. The electric toy includes a fixed or mobile electric toy, for example, a game console, an electric toy car, an electric toy ship, and an electric toy airplane. The electric tool includes an electric metal cutting tool, an electric grinding tool, an electric assembly tool, and an electric railway-specific tool, for example, an electric drill, an electric grinder, an electric wrench, an electric screwdriver, an electric hammer, an electric impact drill, a concrete vibrator, and an electric planer.

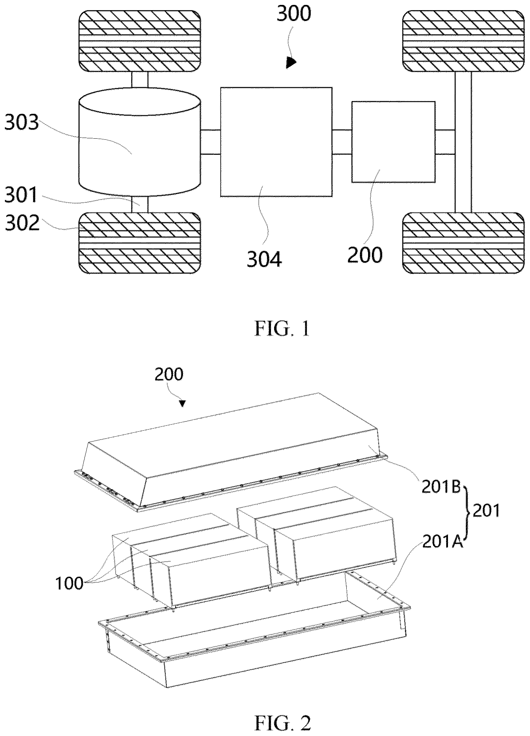

As shown in FIG. 1, the electric apparatus may be a vehicle 300, for example, a new energy vehicle. The new energy vehicle may be a battery electric vehicle, a hybrid electric vehicle, an extended-range electric vehicle, or the like. Alternatively, the electric apparatus may be an unmanned aerial vehicle, a ship, or the like. Specifically, the vehicle 300 may include an axle 301, wheels 302 connected to the axle 301, a motor 303, a controller 304, and a battery pack 200. The motor 303 is configured to drive the axle 301 to rotate. The controller 304 is configured to control operation of the motor 303. The battery pack 200 may be disposed at the bottom, front, or rear of the vehicle 300 for supplying electric energy to operation of the motor 303 and other components in the vehicle.

As shown in FIG. 2, the battery pack 200 includes a box assembly 201 and battery cells 100. In the battery pack 200, there may be one or more battery cells 100. If there are a plurality of battery cells 100, the plurality of battery cells 100 may be connected in series, parallel, or series-parallel, where being connected in series-parallel means that the plurality of battery cells 100 are connected in both series and parallel. Alternatively, a plurality of battery cells 100 may be connected in series, parallel, or series-parallel first to form a battery module, and then a plurality of battery modules are connected in series, parallel, or series-parallel to form an entirety which is accommodated in the box assembly 201. It is also possible that all the battery cells 100 are directly connected in series, parallel, or series-parallel to form an entirety which is then accommodated in the box assembly 201.

The inside of the box assembly 201 is a hollow structure, for example, the box assembly 201 may include a box body 201A and a cover body 201B. The box body 201A and the cover body 201B are snap-fitted. For example, the box body 201A and the cover body 201B each may be a hollow cuboid and have only one face with an opening, where the opening of the box body 201A is disposed opposite the opening of the cover body 201B, and the box body 201A and the cover body 201B are snap-fitted to form a box with an enclosed chamber. Alternatively, the box body 201A is a cuboid with an opening and the cover body 201B is a plate, or the cover body 201B is a cuboid with an opening and the box body 201Ais a plate, and the box body 201A and the cover body 201B are disposed opposite each other and snap-fitted to form the box assembly 201 with an enclosed chamber. At least one battery cell 100 is connected in parallel, series, or series-parallel, and then placed into the enclosed chamber formed by the box body 201A and the cover body 201B being snap-fitted.

To more clearly understand the improvement principle of the battery pack of this application, the structure of the battery cell 100 is first described in detail.

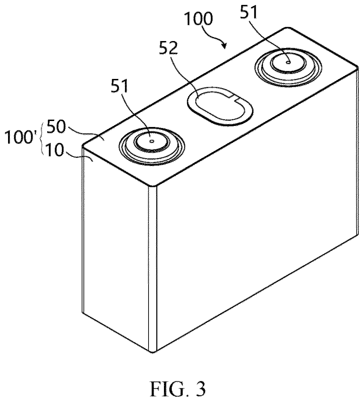

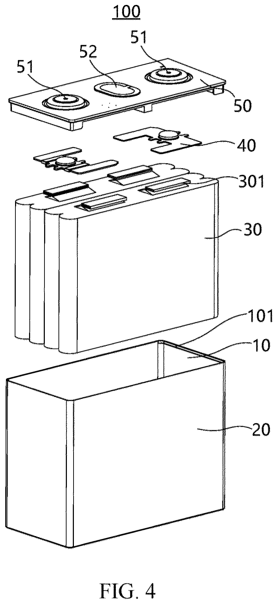

In some embodiments, as shown in FIG. 3 and FIG. 4, the battery cell 100 includes a housing body 10, an electrode assembly 30, an end cover 50, two electrode terminals 51 with opposite polarities, and two adapters 40. The housing body 10 has an opening 101, the end cover 50 covers the opening 101, and the end cover 50 is connected to the housing body 10 to form a housing 100' of the battery cell 100. An outer surface of the housing 100' may be covered by an insulating layer 20 to improve insulation performance of the battery cell 100. Two electrode terminals 51 with opposite polarities may be provided on the end cover 50.

The electrode assembly 30 is disposed in the housing body 10, with electrolyte filled in the housing body 10. One or more electrode assemblies 30 may be provided according to actual use requirements. The electrode assembly 30 is formed by stacking or winding a first electrode plate and a second electrode plate with opposite polarities, and a separator is typically provided between the first electrode plate and the second electrode plate. Parts of the first electrode plate and the second electrode plate that are coated constitute a body portion of the electrode assembly 30, while parts of the first electrode plate and the second electrode plate that are not coated constitute two tabs 30'1 with opposite polarities respectively, where the two tabs 30'1 each are electrically connected to an electrode terminal 51 with the same polarity as the tab 30' through one adapter 40.

Optionally, the end cover 50 may be further provided with a pressure relief component 52. The pressure relief component 52 is an element or component that is actuated when internal pressure or temperature of the battery cell 100 reaches a preset threshold, so as to relieve the internal pressure or temperature. Design of the threshold varies with different design requirements. The threshold may depend on the material used for one or more of the first electrode plate, second electrode plate, electrolyte, and separator in the battery cell 100. The pressure relief component 52 may be in a form of an explosion-proof valve, a gas valve, a pressure relief valve, a safety valve, or the like, and may specifically employ an element or part sensitive to pressure or temperature. To be specific, when the internal pressure or temperature of the battery cell 100 reaches the preset threshold, the pressure relief component 52 performs an action or a weak structure provided in the pressure relief component 52 is destroyed, so as to form an opening or a channel for relieving the internal pressure or temperature.

"Actuate" as used in this application means that the pressure relief component 52 is put into action or is activated to a given state such that the internal pressure and temperature of the battery cell 100 are relieved. The action that the pressure relief component 52 is put into may include but is not limited to cracking, breaking, tearing, or opening at least part of the pressure relief component 52. When the pressure relief component 52 is actuated, emissions inside the battery cell 100 are discharged from an actuated site. In this way, the battery cell 100 can relieve pressure and temperature under controllable pressure or temperature, thereby avoiding more serious potential incidents.

The emissions from the battery cell 100 mentioned herein include but are not limited to electrolyte, fragments of positive and negative electrode plates and separator because of dissolution or breaking, and high-temperature and high-pressure gases (for example, combustible gases including CH₄, CO, and the like) and flames produced by reactions.

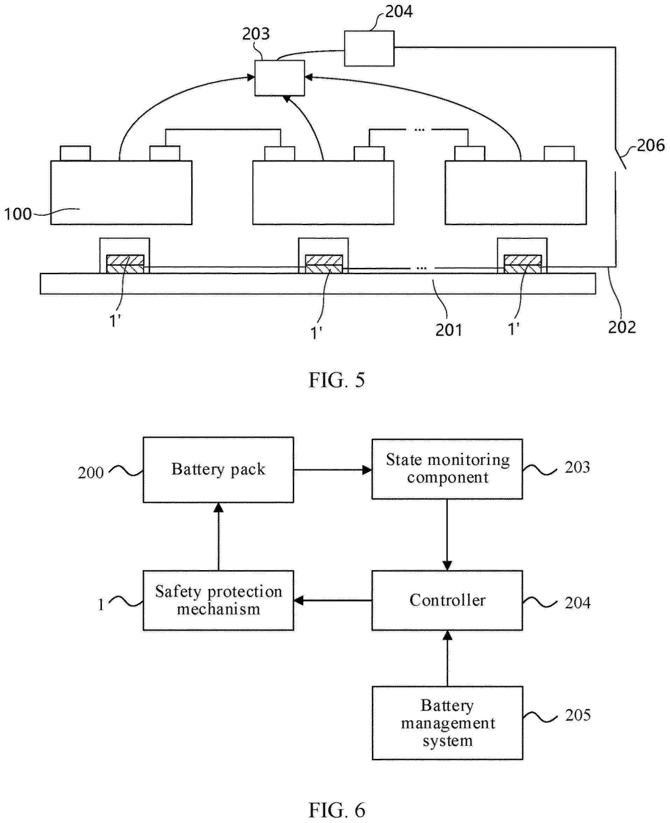

In some embodiments, as shown in FIG. 5, this application provides a battery pack 200 including: a box assembly 201; a plurality of battery cells 100 disposed in the box assembly 201, the battery cell 100 having a housing 100'; and a safety protection mechanism 1 disposed in the box assembly 201 and having a first state and a second state. When the safety protection mechanism 1 is in the first state, the plurality of battery cells 100 are insulated from the box assembly 201; and the safety protection mechanism 1 is in the second state when a preset trigger condition is met, and when the safety protection mechanism 1 is in the second state, the housings 100' of at least some of the battery cells 100 are electrically connected to the box assembly 201.

The structure of the box assembly 201 has been described above in detail. The box assembly 201 may be made of a metal material, for example, aluminum, steel, or other alloy materials. To improve safety of the battery pack 200 during operation, an insulating layer may be provided outside the box assembly 201.

The safety protection mechanism 1 is disposed in the box assembly 201, and optionally, the safety protection mechanism 1 may be disposed in at least one of the following positions: between the battery cell 100 and a bottom wall of the box body 201A, between the battery cell 100 and a side wall of the box body 201A, and between the battery cell 100 and a top wall of the cover body 201B. The position of the safety protection mechanism 1 may be selected for ease of electrical connection between the battery cell 100 and the box assembly 201. Optionally, the safety protection mechanism 1 is disposed on the box assembly 201. For example, the safety protection mechanism 1 may be mounted directly on an inner wall of the box assembly 201; or mounted on an inner wall of the box assembly 201 via a fixed plate, for example, the fixed plate may be a water cooling plate, a bottom guard plate, or the like; or fixed to the battery cell 100.

The safety protection mechanism 1 has the first state and the second state, where the first state is an initial state of the safety protection mechanism 1, and the second state is an on state of the safety protection mechanism 1.

When all the battery cells 100 in the battery pack 200 are operating properly, the safety protection mechanism 1 is in the first state, and all the battery cells 100 in the battery pack 200 are insulated from the box assembly 201, which can ensure insulation performance of the battery pack 200 during normal operation. An outer surface of the housing 100' of the battery cell 100 may be covered by an insulating layer 20, for example, the insulating layer 20 may be made of but is not limited to PET (polyethylene glycol terephthalate) film, PI (polyimide) film, PP (polypropylene) film, PBT (polybutylene terephthalate) film, PVC (polyvinyl chloride) film, or PPS (polyphenylene sulfide) film. The insulating layer 20 may be attached to the surface of the housing 100' by bonding.

When a battery cell 100 in the battery pack 200 is experiencing thermal runaway or other anomalies, if the preset trigger condition is met so that the battery pack 200 cannot operate properly, the safety protection mechanism 1 changes from the first state to the second state, and the housings 100' of at least some of the battery cells 100 in the battery pack 200 are electrically connected to the box assembly 201, so that the battery pack 200 has a stable and controllable voltage. Optionally, any conductive portion of the battery cell 100 is electrically connected to the box assembly 201. Optionally, the battery cell 100 may be electrically connected to the box assembly 201 itself, or may be electrically connected to a structural member disposed in the box assembly 201 and electrically connected to the box assembly 201 so that the battery cell 100 is electrically connected to the box assembly 201 through the structural member.

As shown in FIG. 5, the operating principle of such a battery pack 200 is as follows: When the battery pack 200 is operating properly, a plurality of preset lap points are formed between the plurality of battery cells 100 and the box assembly 201 through the safety protection mechanism 1, but when the safety protection mechanism 1 is in the first state, the safety protection mechanism 1 does not start and the preset lap points are in a state where the battery cells 100 are disconnected from the box assembly 201. When a battery cell 100 in the battery pack 200 is experiencing an anomaly, the safety protection mechanism 1 starts and changes from the first state to the second state, and the preset lap points are in a state where the housings 100' of the battery cells 100 are electrically connected to the box assembly 201.

When the battery pack 200 is experiencing an anomaly, temperature inside the box assembly 201 increases, and the insulating layer 20 covering the housing 100' of the battery cell 100 is melted due to a low melting point of the insulating layer 20, so the housing 100' can be electrically connected to the box assembly 201 by the action of the safety protection mechanism 1. Alternatively, the housing 100' can be electrically connected to the box assembly 201 by the action of the safety protection mechanism 1 destroying the insulating layer 20.

In the battery pack 200 according to these embodiments, when a battery cell 100 experiences an anomaly and the preset trigger condition is met, the safety protection mechanism 1 can change from the first state to the second state to actively and controllably electrically connect at least some of the battery cells 100 to the box assembly 201, so that at least some of the battery cells 100 form an equipotential body with the box assembly 201, avoiding high voltage spark inside the battery pack 200, and adjusting the battery pack 200 from an abnormal state to a stable and controllable state in a timely manner.

Furthermore, insulation failure points can appear inside the battery pack 200 through the electrical connection between at least some of the battery cells 100 and the box assembly 201, which switches a high-voltage system in the battery pack 200 to a plurality of equipotential components, avoiding high voltage arcing, thereby protecting the battery pack 200 and improving the safety of the battery pack 200 during operation.

In addition, when the battery pack 200 is operating with an anomaly, the housing 100' is electrically connected to the box assembly 201. Due to a large surface area of the housing 100', which is conducive to mounting the safety protection mechanism 1 and realizing reliable action of the safety protection mechanism 1, the safety protection mechanism 1 can be kept away from the electrically connected part of the battery cell 100, preventing the action of the safety protection mechanism 1 from affecting the electrically connected part. Moreover, because the battery cell 100 is covered by the insulating layer 20 in a normal operating state of the battery pack 200, the insulation performance between the battery cell 100 and the box assembly 201 can also be reliably ensured with the safety protection mechanism 1 disposed.

In some embodiments, when the safety protection mechanism 1 is in the second state, the number of battery cells 100 electrically connected to the box assembly 201 is at least three.

The structures of at least three battery cells 100 being electrically connected to the box assembly 201 may be the same or not exactly the same.

In the battery pack 200 according to the embodiments, when the preset trigger condition is met, the safety protection mechanism 1 is in the second state, and at least three insulation failure points can be formed inside the battery pack 200 through the electrical connection between at least three battery cells 100 and the box assembly 201, so as to reduce voltage division of an entire high-voltage load between two insulation failure points. This reduces the risk of high voltage spark, and adjusts the battery pack 200 from the abnormal state to the stable and controllable state in a timely manner, which can not only improve the safety of the battery cells 100 in the battery pack 200, but also improve safety of a control electrical box connected to the battery pack 200.

In some embodiments, when the safety protection mechanism 1 is in the second state, the housings 100' of all the battery cells 100 are electrically connected to the box assembly 201.

The structures of all the battery cells 100 being electrically connected to the box assembly 201 may be the same or not exactly the same.

In the battery pack 200 according to the embodiments, when the preset trigger condition is met, the safety protection mechanism 1 is in the second state, all the battery cells 100 in the battery pack 200 are electrically connected to the box assembly 201, and an insulation failure point can be formed on each battery cell 100 in the battery pack 200, so as to minimize voltage division of the entire high-voltage load between two insulation failure points. Even if any one of the battery cells 100 experiences an anomaly, this can reduce the risk of high voltage spark, and adjust the battery pack 200 from the abnormal state to the stable and controllable state in a timely manner, which can not only improve the safety of the battery cells 100 in the battery pack 200, but also improve the safety of the control electrical box connected to the battery pack 200.

In some embodiments, the safety protection mechanism 1 includes a plurality of protection subcomponents 1', where the plurality of protection subcomponents 1' are disposed in one-to-one correspondence to the plurality of battery cells 100, the protection subcomponents 1' each have the first state and the second state, and the protection subcomponent 1' is configured to insulate, in the first state, the corresponding battery cell 100 from the box assembly 201 and to electrically connect, in the second state, the corresponding battery cell 100 to the box assembly 201.

The plurality of protection subcomponents 1' are separate from each other in structure, and the plurality of protection subcomponents 1' may be controlled independently or controlled as a whole. For example, each battery cell 100 in the battery pack 200 may be disposed corresponding to one protection subcomponent 1'.

Optionally, the protection subcomponent 1' can only change from the first state to the second state unidirectionally, so it cannot be restored to the first state after reaching the second state.

Optionally, the protection subcomponent 1' can switch between the first state and the second state. For example, the protection subcomponent 1' is configured to be restored to the first state when the protection subcomponent 1' is in the second state and the preset trigger condition no longer exists, so that the protection subcomponent 1' can be actively restored to the first state after the safety risk of the battery pack 200 is reduced, which can reduce an operational risk to an operator to remove the scrapped battery pack 200 and improve the operational safety.

When all the battery cells 100 in the battery pack 200 are operating properly, all the plurality of protection subcomponents 1' are in the first state, and all the plurality of battery cells 100 in the battery pack 200 are insulated from the box assembly 201, which can ensure the insulation performance of the battery pack 200 during normal operation.

When a battery cell 100 in the battery pack 200 is experiencing thermal runaway or other anomalies, if the preset trigger condition is met so that the battery pack 200 cannot operate properly, all the plurality of protection subcomponents 1' change from the first state to the second state, and all the plurality of battery cells 100 provided with the protection subcomponents 1' in the battery pack 200 are electrically connected to the box assembly 201.

Optionally, when the plurality of battery cells 100 are disposed each corresponding to a protection subcomponent 1', some of the protection subcomponents 1' can also be flexibly controlled to start, so as to switch the high voltage inside the battery pack 200 to different charged components to meet different needs.

In the embodiments, the plurality of protection subcomponents 1' are disposed in one-to-one correspondence to the plurality of battery cells 100, which means that the safety protection mechanism 1 is provided as a plurality of independent protection subcomponents 1', so that the protection subcomponent 1' can be flexibility provided for a specific number of battery cells 100 and battery cells 100 located in specific positions, which simplifies the structure of the protection subcomponents 1' and reduces the volume of the protection subcomponents 1', helping dispose the protection subcomponents 1' in the compact internal space of the battery pack 200. In addition, if the battery pack 200 has a failed protection subcomponent 1' after long-term operation, it can still achieve the safety protection function in a reduced level by relying on other protection subcomponents 1', further improving the safety of the battery pack 200 during operation.

In some embodiments, the safety protection mechanism 1 is disposed between the battery cells 100 and a bottom wall or top wall of the box assembly 201.

When the plurality of battery cells 100 are provided in a single layer, the safety protection mechanism 1 being disposed between the battery cells 100 and the bottom wall or top wall of the box assembly 201 is conducive to selectively electrically connecting some or all of the battery cells 100 to the box assembly 201 when the preset trigger condition is met. When the plurality of battery cells 100 are provided in two layers, the safety protection mechanism 1 being disposed between the battery cells 100 and the bottom wall or top wall of the box assembly 201 is conducive to selectively electrically connecting some or all of the battery cells 100 in one layer to the box assembly 201 when the preset trigger condition is met. If the safety protection mechanism 1 is disposed both between the bottom wall of the box assembly 201 and a battery cell 100 close to the bottom wall and between the top wall of the box assembly 201 and a battery cell 100 close to the top wall, the safety protection for all the battery cells 100 can be achieved.

In the embodiments, safety protection for some or all of the battery cells 100 in one layer can be achieved by only adding a preset space in a height direction of the battery pack 200, which not only ensures a compact internal space of the battery pack 200, but also protects more battery cells 100 using the smallest space, thereby improving the safety of the battery pack 200 during operation.

In some embodiments, as shown in FIG. 5 and FIG. 6, the preset trigger condition includes at least one of the following: temperature inside the box assembly 201 reaches a preset temperature, air pressure inside the box assembly 201 reaches a preset pressure, smoke concentration inside the box assembly 201 reaches a preset concentration, and a battery management system 205 of the battery pack 200 sends an electrical signal indicating anomaly in the battery cells 100.

The foregoing conditions can be arbitrarily selected and combined, and the preset trigger condition can be considered to be reached when one of the conditions is met, or the preset trigger condition can be considered to be reached when some of the conditions are met.

Optionally, a state monitoring component 203 is disposed in the box assembly 201 and configured to detect environmental parameters inside the box assembly 201 to determine whether the preset trigger condition is met and to determine that the preset trigger condition is met when detecting that the signal has exceeded a preset threshold, for example, detecting at least one of temperature, air pressure, and smoke concentration inside the box assembly 201.

For example, the state monitoring component 203 may be a temperature detection component, which may be mounted on an inner wall of the box assembly 201 to collect temperature of the box assembly 201 or temperature of the internal region; or mounted on the end cover 50 of the battery cell 100 to collect temperature of the end cover 50. When the temperature inside the box assembly 201 exceeds the preset temperature, thermal runaway or excessive operating heat generation may occur inside the battery pack 200, so the safety protection needs to start in a timely manner.

For example, the state monitoring component 203 may be a pressure detection component, which may be mounted in the box assembly 201 to collect air pressure of the box assembly 201. When the air pressure inside the box assembly 201 exceeds the preset pressure, thermal runaway may occur inside the battery pack 200, such that the air pressure inside the box assembly 201 is not discharged in a timely manner, so the safety protection needs to start in a timely manner.

For example, the state monitoring component 203 may be a smoke detection component, which may be mounted in the box assembly 201 to collect smoke concentration of the box assembly 201. When the smoke concentration inside the box assembly 201 exceeds the preset concentration, thermal runaway may occur inside the battery pack 200, such that spark or smoke inside the battery cell 100 is emitted into the box assembly 201, so the safety protection needs to start in a timely manner.

Optionally, the battery management system 205 sends the electrical signal indicating anomaly in the battery cells 100, so as to determine that the preset trigger condition is met. The battery management system 205 may acquire the detection signal of the state monitoring component 203, and determine that the preset trigger condition is met when detecting that the signal has exceeded the preset threshold. Alternatively, the battery management system 205 monitors in real time whether the operating electrical signals (including voltage, current, or other parameters) of the battery cells 100 are within preset parameter ranges, and determines that the battery cell 100 is operating with an anomaly when the preset parameter range is exceeded. In both the two cases, the battery management system 205 can send the electrical signal indicating anomaly in the battery cells 100.

Both the signal collected by the state monitoring component 203 and the signal sent by the battery management system 205 can be received by the controller 204. The controller 204 is configured to determine whether the signal collected by the state monitoring component 203 has exceeded the preset threshold, and when the preset threshold is exceeded and/or the electrical signal indicating anomaly in the battery cells 100 is received, to cause the safety protection mechanism 1 to change to the second state, so that at least some of the battery cells 100 are electrically connected to the box assembly 210.

Optionally, the environment inside the box assembly 201 may be directly used as the preset trigger condition for the safety protection mechanism 1, and the preset trigger condition is met when the environmental parameters inside the box assembly 201 exceed the preset thresholds. For example, the temperature inside the box assembly 201 reaches the preset temperature, the air pressure inside the box assembly 201 reaches the preset pressure, and/or the smoke concentration inside the box assembly 201 reaches the preset concentration.

In the embodiments, the occurrence of anomalies in the battery pack 200 can be quantitatively determined, so as to accurately determine the timing of the safety protection mechanism 1 switching to the second state, which not only ensures the safety of the battery pack 200 in the case of anomalies, but also prevents the safety protection mechanism 1 from accidentally starting.

In some embodiments, the safety protection mechanism 1 is configured to be restored to the first state when the safety protection mechanism 1 is in the second state and the preset trigger condition no longer exists.

The safety protection mechanism 1 can switch between the first state and the second state. In the battery pack 200, when the preset trigger condition is met, the safety protection mechanism 1 changes from the first state to the second state, so as to avoid high voltage spark inside the battery pack 200 and adjust the battery pack 200 from the abnormal state to the stable and controllable state in a timely manner. When the internal state of the battery pack 200 tends to be stable so that the preset trigger condition no longer exists, the safety protection mechanism 1 is restored from the second state to the first state, which controls the safety protection mechanism 1 to disconnect, so that all the battery cells 100 are electrically disconnected from the box assembly 201.

In the embodiments, it is taken into consideration that after the battery pack 200 experiences an anomaly, bumps and vibrations during driving of a vehicle may cause some of the battery cells 100 that are electrically connected to the box assembly 201 to detach from the electrical connection, which reduces the number of battery cells 100 with insulation failure points, thereby increasing voltage division between adjacent insulation failure points. In this case, there is still electrical connection between the box assembly 201 and some of the battery cells 100, which poses the operational risk to the operator to remove the scrapped battery pack 200. In the embodiments, after the safety risk of the battery pack 200 is reduced, the safety protection mechanism 1 is actively restored to the first state, which can reduce the operational risk to the operator to remove the scrapped battery pack 200 and improve the operational safety.

Optionally, the safety protection mechanism 1 can only change from the first state to the second state unidirectionally, so it cannot be restored to the first state after reaching the second state.

In some embodiments, the safety protection mechanism 1 is configured to change from the first state to the second state through mechanical action when the preset trigger condition is met.

The mechanical action may be movement of components in the safety protection mechanism 1, for example, linear movement and swing.

In the embodiments, when the preset trigger condition is met, the safety protection mechanism 1 can achieve state change through mechanical action, and the action is reliable, so as to achieve reliability of the safety protection for the battery cell 100, facilitating bidirectional switching between the first state and the second state.

In some embodiments, the battery pack 200 of this application further includes a controller 204 configured to send a start signal to the safety protection mechanism 1 when receiving a signal indicating that the preset trigger condition is met, so that the safety protection mechanism 1 changes from the first state to the second state.

The controller 204 may receive a monitoring signal from the state monitoring component 203 and determine that the preset trigger condition is met when determining that the detection signal has exceeded a preset threshold, or may receive a signal indicating anomaly in the battery cells 100 from the battery management system 205 and determine that the preset trigger condition is met in this case. When the preset trigger condition is met, the controller 204 actively sends the start signal to the safety protection mechanism 1, so that the safety protection mechanism 1 changes from the first state to the second state. Specifically, the controller 204 may send the start signal to the plurality of protection subcomponents 1' simultaneously or separately, so that all the plurality of protection subcomponents 1' change to the second state.

In the embodiments, when the battery pack 200 is operating with an anomaly, the controller 204 actively controls the starting of the safety protection mechanism 1, such that the controller 204 can make a comprehensive determination about the received signal, for example, detecting that the signal has exceeded a preset threshold for a preset time before finally determining that the preset trigger condition is met, so as to avoid accidental deviation in the signal collected by the state monitoring component 203, which can more accurately determine the starting timing of the safety protection mechanism 1, preventing scrapping of the battery pack 200 caused by mistaken starting of the safety protection mechanism 1. In addition, in the active control manner, after the safety protection mechanism 1 starts, the controller 204 can take other safety protection measures, for example, powering down the battery pack 200, cooling the battery pack 200, or actively starting a pressure relief component on the box assembly 201.

In some embodiments, as shown in FIG. 5, the safety protection mechanism 1 includes a plurality of protection subcomponents 1' disposed corresponding to different battery cells 100 respectively, and the battery pack 200 further includes a control harness 202 and a switch 206, where the control harness 202 connects the plurality of protection subcomponents 1' in series, and the switch 206 is disposed in series in the control harness 202; where the controller 204 is configured to send a start signal to the plurality of protection subcomponents 1' by closing the switch 206.

The controller 204 is electrically connected to the state monitoring component 203 and electrically connected to the plurality of protection subcomponents 1', and the plurality of protection subcomponents 1' are connected in series through the control harness 202. The state monitoring component 203 is configured to collect environmental parameters such as temperature, air pressure, or smoke concentration inside the box assembly 201, and send a detection signal to the controller 204. The controller 204 determines that the preset trigger condition is met when determining that the detection signal has exceeded a preset threshold, and sends a signal to close the switch 206, so as to simultaneously switch the plurality of protection subcomponents 1' to the second state.

Optionally, the controller 204 may alternatively be electrically connected to the plurality of protection subcomponents 1' separately, each electrically connected path is provided with one switch 206, and the controller 204 may start the plurality of protection subcomponents 1' by controlling the closure of the plurality of switches 206; or the controller 204 may selectively start some of the protection subcomponents 1.

In the embodiments, when the battery pack 200 is operating with an anomaly, the controller 204 can simultaneously start the plurality of protection subcomponents 1' by controlling the closure of the switch 206, so that the plurality of protection subcomponents 1' simultaneously change to the second state, which can simplify the control manner, improve the response speed when the battery pack 200 is experiencing an anomaly, and quickly cause the housings 100' of the plurality of battery cells 100 to form an equipotential body with the box assembly 201, avoiding high voltage spark inside the battery pack 200, and adjusting the battery pack 200 from the abnormal state to the stable and controllable state in a timely manner.

In some embodiments, the safety protection mechanism 1 is configured to directly change from the first state to the second state under the action of the preset trigger condition.

The safety protection mechanism 1 may directly change its state under the action of the environment inside the box assembly 201, for example, changing its state under the action of pressure, temperature, or smoke inside the box assembly 201.

In the embodiments, when the battery pack 200 is operating with an anomaly, the safety protection mechanism 1 is passively started by directly relying on environmental changes in the box assembly 201, with no need for the controller 204 to determine the environmental changes and then send the start signal to the safety protection mechanism 1. In this way, the safety protection mechanism 1 can start in a more timely and quicker manner, and when the battery pack 200 is out of control, the battery cells 100 can quickly form an equipotential body with the box assembly 201, and a plurality of insulation failure points are formed inside the battery pack 200, which reduces voltage division of the entire high-voltage load between two insulation failure points, prevents momentary high voltage spark, and adjusts the battery pack 200 from the abnormal state to the stable and controllable state in a timely manner, avoiding further deterioration.

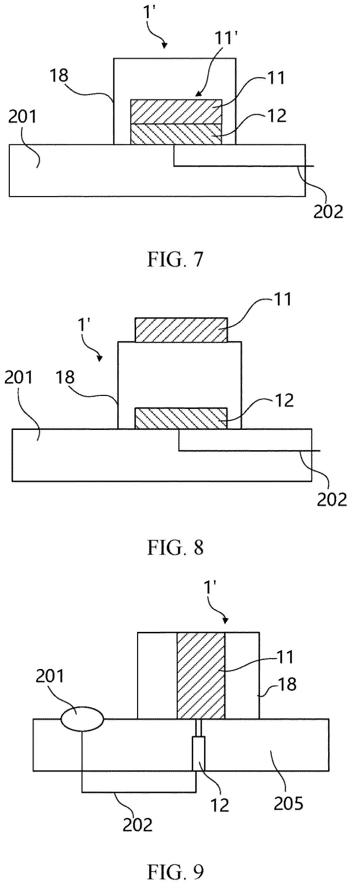

In some embodiments, as shown in FIG. 7 to FIG. 16, the safety protection mechanism 1 includes a conductive portion 11', where the conductive portion 11' is configured to come into contact with the housing 100' through its own movement when the preset trigger condition is met, so that the safety protection mechanism 1 is in the second state, and in the second state, the conductive portion 11' is electrically connected to the box assembly 201. Optionally, the safety protection mechanism 1 is disposed on the box assembly 201.

When a battery cell 100 is experiencing thermal runaway or other anomalies, temperature inside the box assembly 201 increases, and the insulating layer 20 covering the housing 100' of the battery cell 100 is melted due to a low melting point of the insulating layer 20, so the conductive portion 11' moves to come into contact with the housing 100', so that the conductive portion 11' can be electrically connected to the housing 100'. In this way, the housing 100' of the battery cell 100 can be electrically connected to the box assembly 201. Optionally, the conductive portion 11' may be a unified structure and may be in contact with all of the housings 100' of the plurality of battery cells 100. Alternatively, the conductive portion 11' may be provided as a plurality of independent conductive elements 11, and the plurality of conductive elements 11 are in contact with the housings 100' of different battery cells 100 respectively.

Optionally, the movement of the conductive portion 11' destroys the insulating layer 20, so that the conductive portion 11' is electrically connected to the housing 100' through contact.

In the embodiments, the safety protection mechanism 1 starts through the movement of the conductive portion 11', and when the conductive portion 11' moves to come into contact with the housing 100', the safety protection mechanism 1 is in the second state, which can more accurately control the starting of the safety protection mechanism 1. In addition, even if there is a large distance between the box assembly 201 and the battery cell 100, the electrical connection between the housing 100' and the box assembly 201 can also be achieved by controlling the movement of the conductive portion 11', improving the internal insulation performance of the battery pack 200 during normal operation while ensuring that the safety protection mechanism 1 starts reliably.

In some embodiments, as shown in FIG. 5, the safety protection mechanism 1 includes a plurality of protection subcomponents 1' disposed corresponding to different battery cells 100 respectively, the protection subcomponent 1' having the first state and the second state; and the protection subcomponent 1' includes a conductive element 11, where the conductive element 11 is configured to come into contact with the housing 100' through its own movement when the preset trigger condition is met, so that the protection subcomponent 1' is in the second state, and in the second state, the conductive element 11 is electrically connected to the box assembly 201.

The conductive portion 11' mentioned in the foregoing embodiments includes the conductive elements 11 in all the protection subcomponents 1'. For example, the conductive element 11 may be disk-shaped, column-shaped, or the like, and its cross section may be circular, oval, polygonal, or the like, but the shape is not limited thereto.

Optionally, when a battery cell 100 is experiencing thermal runaway or other anomalies, the temperature inside the box assembly 201 increases, and the insulating layer 20 covering the housing 100' of the battery cell 100 is melted due to a low melting point of the insulating layer 20, so the conductive element 11 moves to come into contact with the housing 100', so that the conductive element 11 can be electrically connected to the housing 100'. In this way, the housing 100' of the battery cell 100 can be electrically connected to the box assembly 201.

Optionally, the movement of the conductive element 11 destroys the insulating layer 20, so that the conductive portion 11' is electrically connected to the housing 100' through contact.

In the embodiments, the safety protection mechanism 1 is provided as a plurality of independent protection subcomponents 1', so that the protection subcomponents 1' can be flexibility provided for a specific number of battery cells 100 and battery cells 100 located in specific positions, which simplifies the structure of the protection subcomponents 1' and reduces the volume of the protection subcomponents 1', helping dispose the protection subcomponents 1' in the compact internal space of the battery pack 200. In addition, if the battery pack 200 has a failed protection subcomponent 1' after long-term operation, it can still achieve the safety protection function in a reduced level by relying on other protection subcomponents 1', further improving the safety of the battery pack 200 during operation.

In some embodiments, as shown in FIG. 7 to FIG. 14, the protection subcomponent 1' further includes a force application control component 12, where when the protection subcomponent 1' is in the first state, the force application control component 12 is configured to apply force to the conductive element 11, so as to limit the conductive element 11 to a position separated from the housing 100'; and when the protection subcomponent 1' is in the second state, the force application control component 12 is configured to apply force to the conductive element 11, so that the conductive element 11 moves to come into contact with the housing 100'.

The force application control component 12 can receive a signal sent by the controller 204 to actively apply force to the conductive element 11, and can cause the conductive element 11 to move to come into contact with the housing 100' within a preset time by controlling magnitude and time of the force application. The force application control component 12 may be connected to the controller 204 through the control harness 202.

In the protection subcomponent 1' in the embodiments, the force application control component 12 applies force to the conductive element 11 to cause the conductive element 11 to move, making it easy to control the position of the conductive element 11, thereby reliably keeping the protection subcomponent 1' in the first state or the second state.

In Embodiment 1, the conductive element 11 is a conductive magnet, and the force application control component 12 is a metal member, where the force application control component 12 is energized to form an electromagnet with a polarity opposite to that of the conductive magnet when the protection subcomponent 1' is in the first state, and energized to form an electromagnet with the same polarity as the conductive magnet when the protection subcomponent 1' is in the second state.

The metal member 12 is fixedly disposed. As shown in FIG. 7, in the first state, the metal member is energized to form an electromagnet with a polarity opposite to that of the conductive magnet, and the conductive magnet is adsorbed by the electromagnet formed by the metal member, so the conductive magnet detaches from the housing 100' of the battery cell 100. As shown in FIG. 8, in the case of switching to the second state, the metal member changes the energization parameter and forms the electromagnet with a polarity opposite to that of the conductive magnet, and the conductive magnet is repelled by the electromagnet formed by the metal member, so the conductive magnet moves toward the battery cells 100 until it comes into contact with the housing 100', so that the protection subcomponent 1' reaches the second state. For example, both the conductive element 11 and the force application control component 12 may be a disk structure.

Optionally, the protection subcomponent 1' may further include an accommodating member 18, and the accommodating member 18 is a barrel-shaped member. An end of the accommodating member 18 closer to the box assembly 201 may be provided with an opening, and the force application control component 12 is mounted in the box assembly 201 through the opening. Alternatively, the end of the accommodating member 18 closer to the box assembly 201 may be closed, and the force application control component 12 may be mounted at the bottom of the accommodating member 18. The end of the accommodating member 18 closer to the battery cell 100 has an opening for the conductive element 11 to move outward, and in the second state, the conductive element 11 may be integrally located outside the accommodating member 18 but still in contact with the accommodating member 18, so that the conductive element 11 is electrically connected to the box assembly 201 through the accommodating member 18.

In the embodiments, the conductive element 11 is kept in different positions by changing the polarity of the force application control component 12 after magnetization, with sensitive and rapid action and large force, so that the protection subcomponent 1' can flexibly switch its state, with a simple structure and ease of control. In addition, the protection subcomponent 1' can switch between the first state and the second state, which can not only avoid high voltage spark and adjust the battery pack 200 from the abnormal state to the stable and controllable state in a timely manner when the battery pack 200 experiences an anomaly, but also actively restore the safety protection mechanism 1 to the first state after the safety risk of the battery pack 200 is reduced, reducing the operational risk to the operator to remove the scrapped battery pack 200 and improving the operational safety.

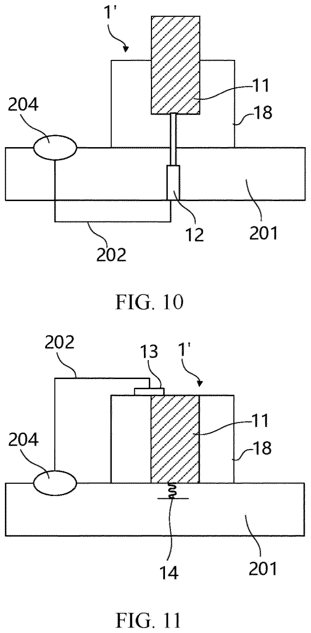

In Embodiment 2, as shown in FIG. 9 and FIG. 10, the force application control component 12 includes an electric driving member configured to: drive the conductive element 11 to be in the position separated from the housing 100' when the protection subcomponent 1' is in the first state, and drive the conductive element 11 to move to come into contact with the housing 100' when the protection subcomponent 1' is in the second state.

The electric driving member may be an electric push rod, or may be a motor and a motion conversion component used in combination. The electric driving member can receive a signal sent by the controller 204 to actively apply force to the conductive element 11, and can cause the conductive element 11 to move to come into contact with the housing 100' within a preset time by controlling an extension speed of the electric driving member. For example, the conductive element 11 may be a columnar structure.

Optionally, the protection subcomponent 1' may further include an accommodating member 18, and the accommodating member 18 is a barrel-shaped member. An end of the accommodating member 18 closer to the box assembly 201 may be provided with an opening, and the force application control component 12 may be mounted in the box assembly 201 and connected to the conductive element 11 through the opening. An end of the accommodating member 18 closer to the battery cells 100 has an opening. As shown in FIG. 9, in the first state, an output terminal of the electric driving member retracts, so that the entire conductive element 11 is located in the accommodating member 18. As shown in FIG. 10, the output terminal of the electric driving member extends out, and in the second state, at least part of a lengthwise segment of the conductive element 11 extends out through the opening and the conductive element 11 remains in contact with the accommodating member 18, so that the conductive element 11 is electrically connected to the box assembly 201 through the accommodating member 18.

In the embodiments, the conductive element 11 can be kept in different positions by changing and controlling the movement of the electric driving member, which can achieve large force and precisely control the position of the conductive element 11, so that the protection subcomponent 1' can flexibly switch its state, with a simple structure and ease of control, improving the reliability of the protection for the battery cell 100. In addition, the protection subcomponent 1' can switch between the first state and the second state, which can not only avoid high voltage spark and adjust the battery pack 200 from the abnormal state to the stable and controllable state in a timely manner when the battery pack 200 experiences an anomaly, but also actively restore the safety protection mechanism 1 to the first state after the safety risk of the battery pack 200 is reduced, reducing the operational risk to the operator to remove the scrapped battery pack 200 and improving the operational safety.

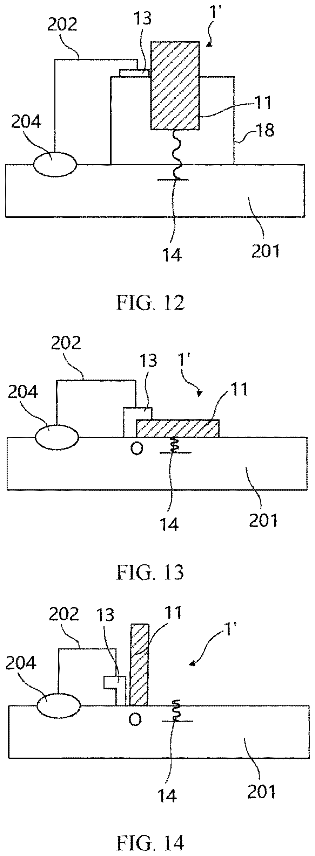

In Embodiment 3, as shown in FIG. 11 and FIG. 12, the force application control component 12 includes a restraint member 13 and an elastic element 14, where the restraint member 13 is configured to limit the conductive element 11 to being separated from the housing 100' when the protection subcomponent 1' is in the first state, and the elastic element 14 is configured to apply elastic force to the conductive element 11 when the protection subcomponent 1' is in the second state, so that the conductive element 11 moves to come into contact with the housing 100'.

Optionally, the protection subcomponent 1' may further include an accommodating member 18, and the accommodating member 18 is a barrel-shaped member. An end of the accommodating member 18 closer to the box assembly 201 may be provided with an opening, and the elastic element 14 may be mounted in the box assembly 201 and connected to the conductive element 11 through the opening. An end of the accommodating member 18 closer to the battery cell 100 has an opening, and the end of the accommodating member 18 closer to the battery cell 100 is provided with the restraint member 13. As shown in FIG. 11, in the first state, the entire conductive element 11 is located in the accommodating member 18, the elastic element 14 is in a compressed state, and the restraint member 13 is configured to limit the conductive element 11 to moving outward from the opening. As shown in FIG. 12, the controller 204 can control the motor to swing the restraint member 13 to cause the restraint member 13 to leave the opening, and in this case, the conductive element 11 extends outward through the opening under the action of the elastic element 14; and in the second state, at least part of a lengthwise segment of the conductive element 11 extends out through the opening and the conductive element 11 remains in contact with the accommodating member 18, so that the conductive element 11 is electrically connected to the box assembly 201 through the accommodating member 18.

For example, the conductive element 11 may be a columnar structure.

In the embodiments, the conductive element 11 can be kept in different positions through cooperation of the restraint member 13 and the elastic element 14. In the first state, the restraint member 13 can reliably limit the position of the conductive element 11 to ensure that the battery cell 100 is insulated from the box assembly 201, and in the case of switching to the second state, the elastic element 14 can provide large force and sensitive action, so that the protection subcomponent 1' can quickly switch to the second state, with a simple structure and ease of control, thereby improving the reliability of the protection for the battery cell 100.

Optionally, in Embodiment 4, as shown in FIG. 13 and FIG. 14, the conductive element 11 changes from the first state to the second state by swinging. For example, the conductive element 11 may be a rod or plate structure. As shown in FIG. 13, in the first state, the conductive element 11 is placed flat on the box assembly 201 and the conductive element 11 is constrained in the flat state directly by the restraint member 13. As shown in FIG. 14, in the second state, the controller 204 can control the motor to swing the restraint member 13 to cause the restraint member 13 to leave the conductive element 11, and in this case, the conductive element 11 swings around a hinge point O under the action of the elastic element 14, such that the free end of the conductive element 11 is lifted so as to electrically connect the conductive element 11 to the box assembly 201. In such a structure, because the conductive element 11 keeps being electrically connected to the box assembly 201 at the hinge point O by swinging, there is no need to provide an intermediate adapting structure like the accommodating member 18, further simplifying the structure.

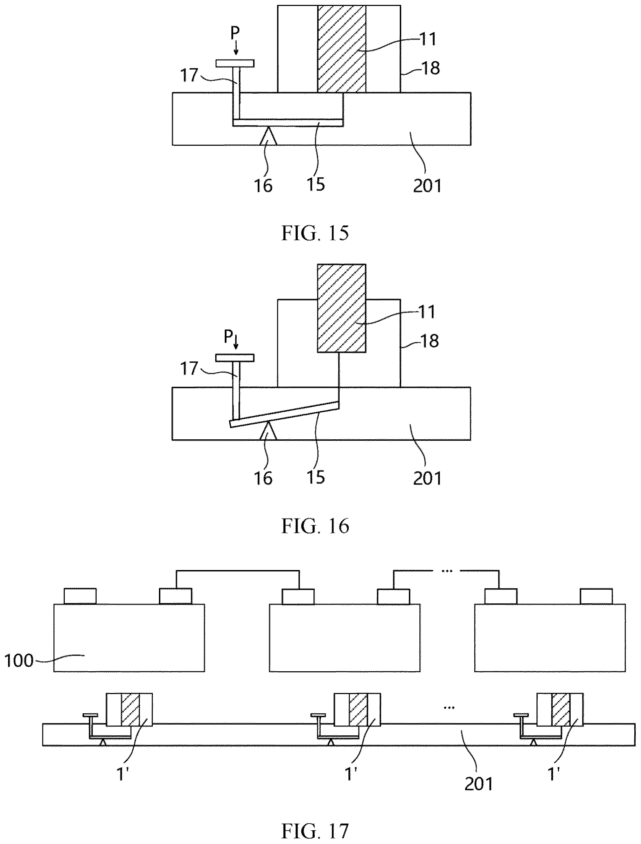

In Embodiment 5, as shown in FIG. 15 and FIG. 16, the safety protection mechanism 1 includes a plurality of protection subcomponents 1' disposed corresponding to different battery cells 100 respectively, where the protection subcomponent 1' includes: a balancing member 15, with a first end connected to the conductive element 11; a support 16 configured to support the balancing member 15; and an actuating member 17 connected to a second end of the balancing member 15 and configured to move when air pressure inside the box assembly 201 reaches a preset pressure, such that the balancing member 15 swings around a support point, which causes the conductive element 11 to move to come into contact with the housing 100', so that the protection subcomponent 1' changes from the first state to the second state.

Optionally, the protection subcomponent 1' may further include an accommodating member 18, and the accommodating member 18 is a barrel-shaped member. An end of the accommodating member 18 closer to the box assembly 201 may be provided with an opening for the first end of the balancing member 15 to apply force to the conductive element 11. An end of the accommodating member 18 closer to the battery cell 100 has an opening, so that the conductive element 11 extends out through the opening. The support 16 is fixed to the box assembly 201 and the balancing member 15 is supported by the support 16 to form a lever structure. For example, the conductive element 11 may be a columnar structure.

As shown in FIG. 15, in the first state, the air pressure force on the actuating member 17 does not exceed a preset force, so the balancing member 15 does not deflect around the support 16, and the entire conductive element 11 is located in the accommodating member 18. To reliably limit the conductive element 11 to the accommodating member 18, the opening at the end of the accommodating member 18 closer to the battery cell 100 may be closed by a film.

As shown in FIG. 16, when the air pressure force on the actuating member 17 exceeds the preset force, that is, when the preset trigger condition is met, the balancing member 15 deflects around the support 16, which causes the conductive element 11 to lift and extend outward through the opening. In the second state, at least part of a lengthwise segment of the conductive element 11 extends out through the opening and the conductive element 11 remains in contact with the accommodating member 18, so that the conductive element 11 is electrically connected to the box assembly 201 through the accommodating member 18.

As shown in FIG. 17, the plurality of battery cells 100 each are corresponding to one protection subcomponent 1'. The protection subcomponent 1' is passively controlled, and the protection subcomponent 1' is fixed to the box assembly 201 and located between the battery cells 100 and the box assembly 201.

In the embodiments, the position of the conductive element 11 is adjusted through the air pressure inside the box assembly 201 acting on a lever structure, which can passively control the state switching of the protection subcomponent 1' based on the environmental situations and eliminate the state monitoring component 203, thereby simplifying the structure and avoiding mistaken starting of the protection subcomponent 1' caused by failure of electronic components, improving the reliability of the protection for the battery cell 100. In addition, when the air pressure inside the box assembly 201 returns to normal, the protection subcomponent 1' can be restored to the first state, which can not only avoid high voltage spark and adjust the battery pack 200 from the abnormal state to the stable and controllable state in a timely manner when the battery pack 200 experiences an anomaly, but can also actively restore the safety protection mechanism 1 to the first state after the safety risk of the battery pack 200 is reduced, thereby reducing the operational risk to the operator when removing the scrapped battery pack 200 and improving the operational safety.

In some embodiments, the conductive element 11 is configured to come into contact with the housing 100' by moving or rotating when the preset trigger condition is met.

In the moving structure of the conductive element 11, the conductive element 11 may move perpendicular to a surface of the battery cell 100 where an insulation failure point is to be formed.

In the embodiments, the structure with a moving conductive element 11 allows for easier control of the moving track, so the conductive element 11 can be accurately electrically connected to a preset lap point on the housing 100'. For the structure with a rotating conductive element 11, because the conductive element 11 keeps being electrically connected to the box assembly 201 during rotation, there is no need to provide an intermediate adapting structure like the accommodating member 18, which further simplifies the structure.

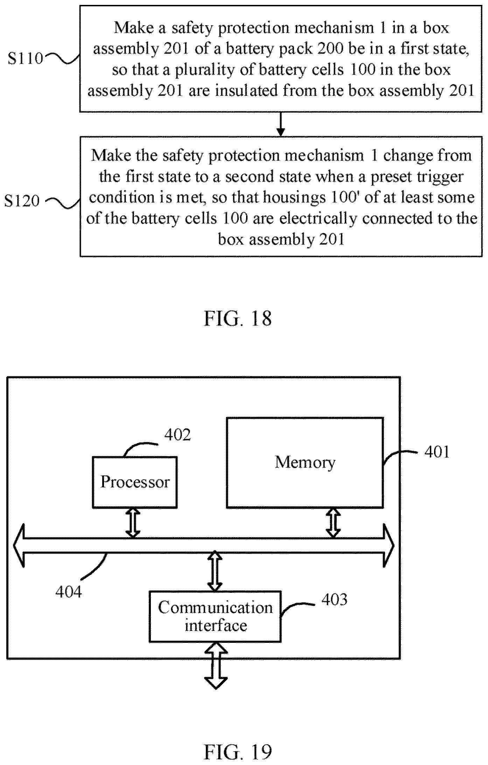

In addition, this application provides a safety control method for battery pack 200. As shown in FIG. 18, the method includes the following steps.

S110. Make a safety protection mechanism 1 in a box assembly 201 of the battery pack 200 be in a first state, so that a plurality of battery cells 100 in the box assembly 201 are insulated from the box assembly 201.

S 120. Make the safety protection mechanism 1 change from the first state to a second state when a preset trigger condition is met, so that housings 100' of at least some of the battery cells 100 are electrically connected to the box assembly 201.

In the battery pack 200 according to the embodiments, when a battery cell 100 experiences an anomaly and the preset trigger condition is met, the safety protection mechanism 1 can change from the first state to the second state to actively and controllably electrically connect at least some of the battery cells 100 to the box assembly 201, so that at least some of the battery cells 100 form an equipotential body with the box assembly 201, avoiding high voltage spark inside the battery pack 200, and adjusting the battery pack 200 from an abnormal state to a stable and controllable state in a timely manner.

Furthermore, insulation failure points can appear inside the battery pack 200 through the electrical connection between at least some of the battery cells 100 and the box assembly 201, which switches a high-voltage system in the battery pack 200 to a plurality of equipotential components, thereby protecting the battery pack 200 and improving safety of the battery pack 200 during operation.

In addition, when the battery pack 200 is operating with an anomaly, the housing 100' is electrically connected to the box assembly 201. Due to a large surface area of the housing 100', which is conducive to mounting the safety protection mechanism 1 and realizing reliable action of the safety protection mechanism 1, the safety protection mechanism 1 can be kept away from the electrically connected part of the battery cell 100, preventing the action of the safety protection mechanism 1 from affecting the electrically connected part. Moreover, because the battery cell 100 is covered by an insulating layer 20 in a normal operating state of the battery pack 200, insulation performance between the battery cell 100 and the box assembly 201 can also be reliably ensured with the safety protection mechanism 1 disposed.

In some embodiments, when the preset trigger condition is met, S 120 of making the safety protection mechanism 1 change from the first state to a second state includes:
when a controller 204 receives a signal indicating that the preset trigger condition is met, sending, by the controller 204, a start signal to the safety protection mechanism 1, so that the safety protection mechanism 1 changes from the first state to the second state.

In the embodiments, when the battery pack 200 is operating with an anomaly, the controller 204 actively controls the starting of the safety protection mechanism 1, such that the controller 204 can make a comprehensive determination about the received signal, for example, detecting that the signal has exceeded a preset threshold for a preset time before finally determining that the preset trigger condition is met, so as to avoid accidental deviation in the signal collected by a state monitoring component 203, which can more accurately determine the starting timing of the safety protection mechanism 1, preventing scrapping of the battery pack 200 caused by mistaken starting of the safety protection mechanism 1. In addition, in the active control manner, after the safety protection mechanism 1 starts, the controller 204 can take other safety protection measures, for example, powering down the battery pack 200, cooling the battery pack 200, or actively starting a pressure relief component on the box assembly 201.

In some embodiments, the safety control method in this application further includes:
under the condition that the safety protection mechanism 1 is in the second state, when the preset trigger condition no longer exists, restoring the safety protection mechanism 1 to the first state.

In the embodiments, it is taken into consideration that after the battery pack 200 experiences an anomaly, bumps and vibrations during driving of a vehicle may cause some of the battery cells 100 that are electrically connected to the box assembly 201 to detach from the electrical connection, which reduces the number of battery cells 100 with insulation failure points, thereby increasing voltage division between adjacent insulation failure points. In this case, there is still electrical connection between the box assembly 201 and some of the battery cells 100, which poses an operational risk to an operator to remove the scrapped battery pack 200. In the embodiments, after the safety risk of the battery pack 200 is reduced, the safety protection mechanism 1 is actively restored to the first state, which can reduce the operational risk to the operator to remove the scrapped battery pack 200 and improve the operational safety.

The controller 204 described in this disclosure may be a general-purpose processor, a programmable logic controller (Programmable Logic Controller, PLC for short), a digital signal processor (Digital Signal Processor, DSP for short), an application-specific integrated circuit (Application Specific Integrated Circuit, ASIC for short), a field-programmable gate array (Field-Programmable Gate Array, FPGA for short) or other programmable logic device, a discrete gate or transistor logic device, a discrete hardware component, or any appropriate combination thereof, which are used for performing the functions described in this disclosure.

In addition, this application further provides a safety control apparatus for battery pack 200 including: a memory configured to store instructions; and a processor configured to execute the instructions, so that the safety control apparatus performs the safety control method for battery pack 200 according to the foregoing embodiments.

FIG. 19 is a schematic structural diagram of a safety control apparatus for battery pack 200 in some embodiments of this application. The computer apparatus includes a memory 401 and a processor 402.

The memory 401 is configured to store instructions. The processor 402 is coupled to the memory 401. The processor 402 is configured to perform, according to the instructions stored in the memory, the method in the foregoing embodiments.

As shown in FIG. 19, the computer apparatus further includes a communication interface 403 for exchanging information with other devices. In addition, the computer apparatus further includes a bus 404. The processor 402, the communication interface 403, and the memory 401 communicate with each other via the bus 404.

The memory 401 may include a high-speed RAM memory, and may further include a non-volatile memory (non-volatile memory), for example, at least one disk memory. The memory 401 may alternatively be a memory array. Alternatively, the memory 401 may be divided into blocks, and blocks may be combined into a virtual volume according to a specific rule.

In addition, the processor 402 may be a central processing unit CPU, or may be an application-specific integrated circuit ASIC, or may be configured as one or more integrated circuits for implementing the embodiments of this application.

In addition, this application further provides a computer-readable storage medium, where the computer-readable storage medium stores computer instructions, and when the instructions are executed by a processor, the safety control method for battery pack 200 according to the foregoing embodiments is implemented.

In some other embodiments, a computer-readable storage medium is provided, where the computer-readable storage medium stores computer program instructions, and when the instructions are executed by a processor, the steps of the safety control method according to the foregoing embodiments are implemented. Persons skilled in the art should understand that the embodiments of this application may be provided as a method, an apparatus, or a computer program product. Therefore, this application may employ the form of hardware-only embodiments, software-only embodiments, or embodiments combining software and hardware. In addition, this application may employ the form of a computer program product that is implemented on one or more computer-usable non-transitory storage media (including but not limited to a disk memory, a CD-ROM, and an optical memory) that contain computer-usable program code.

This application is described with reference to the flowcharts and/or block diagrams of the method, the device (system), and the computer program product according to the embodiments of this application. It should be understood that computer program instructions may be used to implement each process and/or each block in the flowcharts and/or the block diagrams and a combination of processes and/or blocks in the flowcharts and/or the block diagrams. These computer program instructions may be provided to a general-purpose computer, a special-purpose computer, an embedded processor, or a processor of another programmable data processing device to generate a machine, so that the instructions executed by the computer or the processor of the another programmable data processing device generate an apparatus for implementing a specific function in one or more processes in the flowcharts and/or in one or more blocks in the block diagrams.

These computer program instructions may alternatively be stored in a computer-readable memory that can direct a computer or another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Although this application has been described with reference to the preferred embodiments, various modifications to this application and replacements of the components therein with equivalents can be made without departing from the scope of this application. In particular, as long as there is no structural conflict, the various technical features mentioned in the embodiments can be combined in any manner. This application is not limited to the specific embodiments disclosed in this specification but includes all technical solutions falling within the scope of the claims.

## Claims

1. A battery pack (200), comprising:
a box assembly (201);
a plurality of battery cells (100) disposed in the box assembly (201), the battery cell (100) comprising a housing (100'); and
a safety protection mechanism (1) disposed in the box assembly (201) and having a first state and a second state, wherein when the safety protection mechanism (1) is in the first state, the plurality of battery cells (100) are insulated from the box assembly (201); and the safety protection mechanism (1) is in the second state when a preset trigger condition is met, and when the safety protection mechanism (1) is in the second state, the housings (100') of at least some of the battery cells (100) are electrically connected to the box assembly (201).

2. The battery pack (200) according to claim 1, wherein when the safety protection mechanism (1) is in the second state, the number of battery cells (100) electrically connected to the box assembly (201) is at least three.

3. The battery pack (200) according to claim 1 or 2, wherein when the safety protection mechanism (1) is in the second state, the housings (100') of all the battery cells (100) are electrically connected to the box assembly (201).

4. The battery pack (200) according to any one of claims 1 to 3, wherein the safety protection mechanism (1) comprises a plurality of protection subcomponents (1'), wherein the plurality of protection subcomponents (1') are disposed in one-to-one correspondence to the plurality of battery cells (100), the protection subcomponents (1') each have the first state and the second state, and the protection subcomponent (1') is configured to insulate, in the first state, the corresponding battery cell (100) from the box assembly (201) and to electrically connect, in the second state, the corresponding battery cell (100) to the box assembly (201).

5. The battery pack (200) according to any one of claims 1 to 4, wherein the safety protection mechanism (1) is disposed between the battery cells (100) and a bottom wall or top wall of the box assembly (201).

6. The battery pack (200) according to any one of claims 1 to 5, wherein the preset trigger condition comprises at least one of the following: temperature inside the box assembly (201) reaches a preset temperature, air pressure inside the box assembly (201) reaches a preset pressure, smoke concentration inside the box assembly (201) reaches a preset concentration, and a battery management system (205) of the battery pack (200) sends an electrical signal indicating anomaly in the battery cells (100).

7. The battery pack (200) according to any one of claims 1 to 6, wherein the safety protection mechanism (1) is configured to be restored to the first state when the safety protection mechanism (1) is in the second state and the preset trigger condition no longer exists.

8. The battery pack (200) according to any one of claims 1 to 7, wherein the safety protection mechanism (1) is configured to change from the first state to the second state through mechanical action when the preset trigger condition is met.

9. The battery pack (200) according to any one of claims 1 to 8, further comprising a controller (204) configured to send a start signal to the safety protection mechanism (1) when receiving a signal indicating that the preset trigger condition is met, so that the safety protection mechanism (1) changes from the first state to the second state.

10. The battery pack (200) according to claim 9, wherein the safety protection mechanism (1) comprises a plurality of protection subcomponents (1') disposed corresponding to different battery cells (100) respectively, and the battery pack (200) further comprises a control harness (202) and a switch (206), wherein the control harness (202) connects the plurality of protection subcomponents (1') in series, and the switch (206) is disposed in series in the control harness (202);
wherein the controller (204) is configured to send a start signal to the plurality of protection subcomponents (1') by closing the switch (206).

11. The battery pack (200) according to any one of claims 1 to 8, wherein the safety protection mechanism (1) is configured to directly change from the first state to the second state under the action of the preset trigger condition.

12. The battery pack (200) according to any one of claims 1 to 8, wherein the safety protection mechanism (1) comprises a conductive portion (11'), wherein the conductive portion (11') is configured to come into contact with the housing (100') through its own movement when the preset trigger condition is met, so that the safety protection mechanism (1) is in the second state, and in the second state, the conductive portion (11') is electrically connected to the box assembly (201).

13. The battery pack (200) according to any one of claims 1 to 12, wherein the safety protection mechanism (1) comprises a plurality of protection subcomponents (1') disposed corresponding to different battery cells (100) respectively, the protection subcomponent (1') having the first state and the second state; and the protection subcomponent (1') comprises a conductive element (11), wherein the conductive element (11) is configured to come into contact with the housing (100') through its own movement when the preset trigger condition is met, so that the protection subcomponent (1') is in the second state, and in the second state, the conductive element (11) is electrically connected to the box assembly (201).

14. The battery pack (200) according to claim 13, wherein the protection subcomponent (1') further comprises a force application control component (12), wherein when the protection subcomponent (1') is in the first state, the force application control component (12) is configured to apply force to the conductive element (11), so as to limit the conductive element (11) to a position separated from the housing (100'); and when the protection subcomponent (1') is in the second state, the force application control component (12) is configured to apply force to the conductive element (11), so that the conductive element (11) moves to come into contact with the housing (100').

15. The battery pack (200) according to claim 14, wherein the conductive element (11) is a conductive magnet, and the force application control component (12) is a metal member, wherein the force application control component (12) is energized to form an electromagnet with a polarity opposite to that of the conductive magnet when the protection subcomponent (1') is in the first state, and energized to form an electromagnet with the same polarity as the conductive magnet when the protection subcomponent (1') is in the second state.

16. The battery pack (200) according to claim 14, wherein the force application control component (12) comprises an electric driving member configured to: drive the conductive element (11) to be in the position separated from the housing (100') when the protection subcomponent (1') is in the first state, and drive the conductive element (11) to move to come into contact with the housing (100') when the protection subcomponent (1') is in the second state.

17. The battery pack (200) according to claim 14, wherein the force application control component (12) comprises a restraint member (13) and an elastic element (14), wherein the restraint member (13) is configured to limit the conductive element (11) to being separated from the housing (100') when the protection subcomponent (1') is in the first state, and the elastic element (14) is configured to apply elastic force to the conductive element (11) when the protection subcomponent (1') is in the second state, so that the conductive element (11) moves to come into contact with the housing (100').

18. The battery pack (200) according to claim 13, wherein the safety protection mechanism (1) comprises a plurality of protection subcomponents (1') disposed corresponding to different battery cells (100) respectively, wherein the protection subcomponent (1') comprises:
a balancing member (15) with a first end connected to the conductive element (11);
a support (16) configured to support the balancing member (15); and
an actuating member (17) connected to a second end of the balancing member (15) and configured to move when air pressure inside the box assembly (201) reaches a preset pressure, such that the balancing member (15) swings around a support point, which causes the conductive element (11) to move to come into contact with the housing (100'), so that the protection subcomponent (1') changes from the first state to the second state.

19. The battery pack (200) according to any one of claims 13 to 18, wherein the conductive element (11) is configured to come into contact with the housing (100') by moving or rotating when the preset trigger condition is met.

20. An electric apparatus, comprising the battery pack (200) according to any one of claims 1 to 19, wherein the battery pack (200) is configured to supply electric energy to the electric apparatus.

21. A safety control method for battery pack (200), comprising
making a safety protection mechanism (1) in a box assembly (201) of the battery pack (200) be in a first state, so that a plurality of battery cells (100) in the box assembly (201) are insulated from the box assembly (201); and
making the safety protection mechanism (1) change from the first state to a second state when a preset trigger condition is met, so that housings (100') of at least some of the battery cells (100) are electrically connected to the box assembly (201).

22. The safety control method for battery pack (200) according to claim 21, wherein the making the safety protection mechanism (1) change from the first state to a second state when a preset trigger condition is met comprises:
when a controller (204) receives a signal indicating that the preset trigger condition is met, sending, by the controller (204), a start signal to the safety protection mechanism (1), so that the safety protection mechanism (1) changes from the first state to the second state.

23. The safety control method for battery pack (200) according to claim 21 or 22, further comprising:
under the condition that the safety protection mechanism (1) is in the second state, when the preset trigger condition no longer exists, restoring the safety protection mechanism (1) to the first state.
